# EUROPEAN PATENT SPECIFICATION

(11) **EP 1 657 185 B1**
(45) Date of publication and mention of the grant of the patent: **02.07.2008**
(21) Application number: 05110498.2
(22) Date of filing: 09.11.2005
(51) Int. Cl.: B65D 85/52, A01G 9/10

(54) **Container for plant cuttings**
Behälter für Pflanzenstecklinge
Conteneur pour boutures

(30) Priority: 11.11.2004 NL 1027488
(43) Date of publication of application: 17.05.2006
(73) Proprietor: Van der Starre, Huibert, 2742 KV Waddinxveen (NL)
(72) Inventor: van der Starre, Huibert, 2742 KV Waddinxveen (NL); van der Starre, Huibert, 2751 AH Benthuizen (NL)
(74) Representative: van Westenbrugge, Andries

(56) References cited:
- DE-U1- 8 704 608
- GB-A- 1 204 647

## Description

The present invention relates to a container for containing a number of plants, comprising a substantially rectangular tray with upright walls and base. Such a container is generally known in the art. This is used, for example, for planting a number of cuttings. In this description a cutting is understood to be, inter alia, a young plant that is provided with at least one (part of a) leaf that extends obliquely upwards or essentially horizontally from the vertically positioned stem.

Plants are put in such trays as cuttings in order to develop further. In this context the aim is to make the optimum possible use of the space in the tray.

In practice trays are placed against one another during transport and in the cultivation area concerned. To prevent damage to the plants it is important that the plant does not protrude beyond the container in which the plant concerned has been accommodated.

In the case of cuttings with leaves this problem is solved by placing these cuttings with the leaf facing inwards, starting from one side of the container. However, this method of placement cannot be continued because otherwise the opposite side would have a large number of protruding leaves, assuming that the stems are placed as close as possible to the edge of the container. Therefore the plants in the last row are turned round, that is to say with the leaves facing away from the edge. A sort of transition region is created in the tray, where the leaves protrude in two directions.

The various aspects demand dexterity on the part of the person who is placing the cuttings and makes the possible automated placement of cuttings more difficult. Furthermore, either incomplete utilisation of the container or a shadow effect from leaves that overlap one another is produced. If leaves are arranged overlapping, the growth of the cutting concerned will be restricted, amongst other things by greater susceptibility to disease and reduced access for light.

The aim of the present invention is to provide a container in which it is possible to place cuttings in a simple manner.

This aim is realised with a container as described above in that a support extends from one wall of said tray, which support is arranged protruding outwards from said container at an angle of 5 - 90°, in particular 35 - 90° to said base surface. According to the present invention there is a support on which the relevant part of the plant, such as a (part of a) leaf can lie or above which the relevant part of a plant, such as a (part of a) leaf, lies. This support is above the top of the actual tray, so that when the next tray is placed against it the support always remains above the edge of said next tray. As a result this support provides protection for leaves, that is to say prevents leaves hanging downwards and becoming trapped between two adjacent trays. Furthermore, this support provides protection against impacts from the side and the like through which the leaves could be damaged.

Using the construction according to the invention it is possible when planting cuttings to place all plant parts such as leaves in the same direction, as a result of which a more optimum use of the space available in a tray can be achieved.

The container can be made of any material known in the state of the art. Preferably, this consists of plastic material and isrealisable. The support is preferably formed as a part on the container, with a somewhat pivoting join.

According to a further advantageous embodiment of the invention the support is provided with openings, such as slits. As a result the plant in a following tray located beneath the support can be provided with as much light and air as possible. In the case of relatively large openings, the support will be provided with reinforcing ribs.

The tray can also be provided with reinforcing ribs. This is important, in particular, for trays of somewhat larger size. Such reinforcing ribs preferably extend from the base into the interior of the tray. Furthermore, these extend from the walls into the interior of the tray.

As a result, compartmentalisation of the tray can also be provided.

According to an advantageous embodiment of the invention the ribs are made hollow with an access opening to the cavity that is on the outside of the tray. Apart from the fact that appreciable stiffness of the ribs is obtained by this means, as a result the possibility will also be created for grasping and transporting the tray with forks, hooks and the like.

Moreover, it is possible to provide the support with one or more corner cut-outs. As a result as large as possible a surface area of the trays can be accommodated on transport means, such as a carriage and more particularly a multi-tiercarriage.

According to a particular embodiment of the invention the containers are so sized that six trays can be placed on one tier of a multi-tiercarriage.

The invention also relates to a method for propagating a plant by cuttings, comprising the provision of cuttings, each provided with at least one part of a plant that in the planted position extends horizontally therefrom, the provision of a container filled with cultivation substrate, wherein said container is a container as described above, and placing said cuttings in said container, wherein the placement of said cuttings comprises planting said cuttings with said plant parts in at least two rows, wherein said plant parts are arranged facing said support.

The invention will be explained in more detail below with reference to an illustrative embodiment shown in the drawing. In the drawing:
Fig. 1 shows, diagrammatically, a perspective view of a container according to the invention;
Fig. 2 shows a side view of three adjacent containers according to the invention; and
Fig. 3 shows a plan view of a number of adjacent containers arranged on acarriage, which is not shown in more detail.

In the drawings the cuttings tray according to the present invention is indicated in its entirety by 1. This consists of a tray-shaped container 2 with base 3, two opposing short walls 4 and two opposing long walls 5. The base 3 can optionally be provided with openings, such as slits.

For the rigidity of the tray-shaped container hollow ribs 6 have been made that extend from the base 3 and the long walls 5. The cavity in the ribs is indicated by 7. This cavity is open to the outside, so that forks, hooks and the like approaching in the direction of arrow 8 can be inserted into this cavity to manipulate the tray-shaped container 2. A support 9 is joined to one of the long walls 5 of the cuttings tray 1. This support 9 is provided with slit-shaped openings 10 and reinforcing ribs 11.

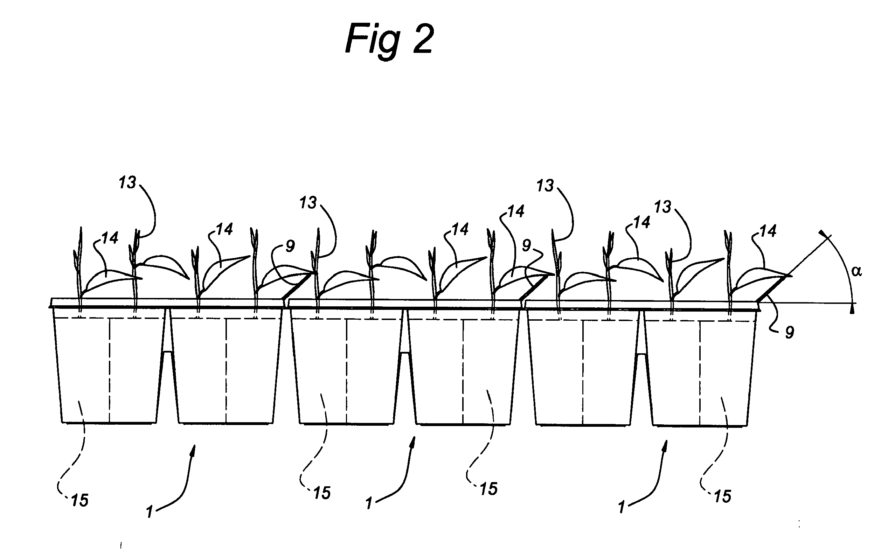

Fig 2 indicates in cross-section how a large number of plants or cuttings 13 have been placed in the substrate material 15 that has been put in the tray. Each cutting 13 has a relatively large leaf 14. As can be seen from Fig. 2, all leaves are arranged extending in the same direction. In the case of the cuttings tray furthest to the left in Fig. 2 the final row of cuttings (that furthest to the right) will extend above support 9. Fig. 2 indicates that support 9 makes an angle α with the horizontal. This angle is between 5 and 90°, in particular 35 and 90°. When the containers 1 shown in Fig. 2 are placed against one another, the support 9 of the container furthest to the left will prevent any hanging leaves from a row of cuttings furthest to the right in the container 1 furthest to the left becoming trapped between the two adjacent containers 1.

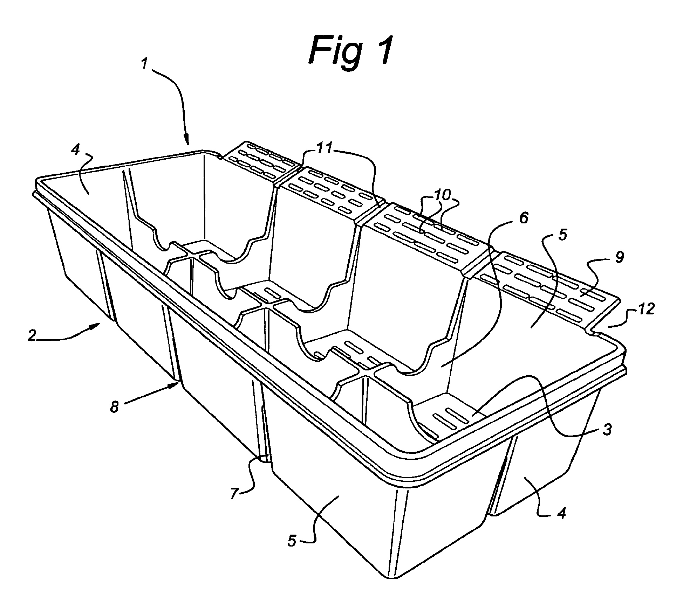

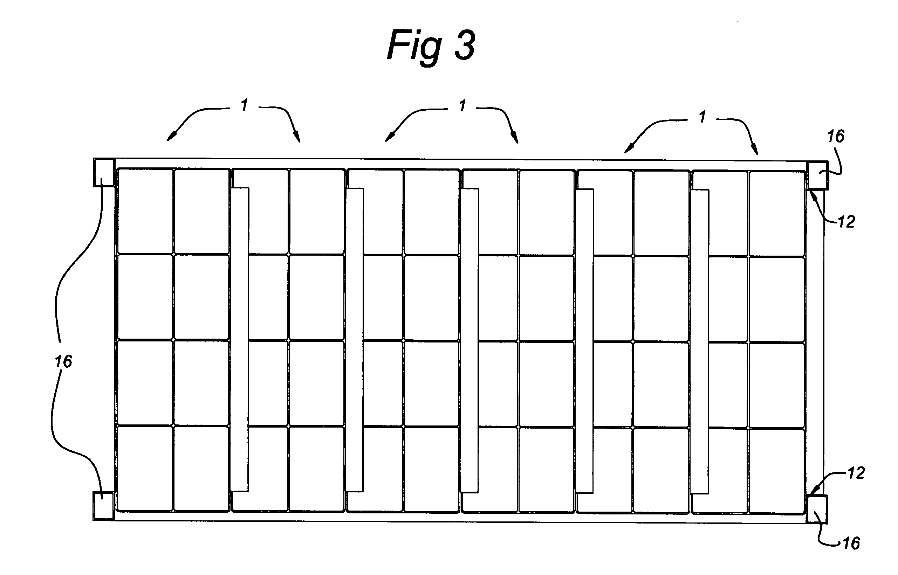

As shown in Figs 1 and 3, each container is provided with cut-outs 12. The cut-out 12 is made in the support. The vertical columns 16 of a carriage such as a multi-tier carriage are shown in Fig. 3. It can be seen that with the set-up and dimensions used here six containers placed next to one another can be placed on one tier of a multi-tier carriage. These dimensions can, of course, vary.

It will be understood that the container described above can have any construction known in the state of the art. Apart from compartmentalisation, the dimensions thereof can vary and these can be suitable for a wide variety of types of substrate. Moreover, these can be suitable for grow plugs. Facilities can also be provided for applying a label bearing information to the container. This can comprise, for example, making a slit in the bent over edge of the container. Such a bent over edge is advantageous for promoting the removal of residual soil.

Containers can also be produced in any manner known in the art. If plastic is used, thermoforming or injection moulding will be used. However, it is also possible to make the containers from paper-like materials, such as moulded fibre.

Further variants will be immediately apparent to those skilled in the art after reading the above description and fall within the scope of the appended claims.

## Claims

1. Container (2) for containing a number of plants (13), comprising a substantially rectangular tray with upright walls (4, 5) and base (3), **characterised in that** a support extends from one wall (5) of said tray, which support (9) is arranged protruding outwards from said container with said wall at an angle (α) of 5 - 90° to said base surface.

2. Container (2) according to Claim 1, wherein said support (9) is fixed to said wall (5) such that it yields with the latter.

3. Container (2) according to one of the preceding claims, wherein said tray is elongated and said support is arranged on a long side thereof.

4. Container (2) according to one of the preceding claims, wherein said support is provided with openings (10).

5. Container (2) according to one of the preceding claims, wherein reinforcing ribs (6) are made in said tray extending upwards from the base (3) thereof.

6. Container (2) according to Claim 5, wherein said ribs are of hollow construction, with the cavity arranged opening towards the base.

7. Container (2) according to one of the preceding claims, wherein compartmentalisation is made in said tray.

8. Container (2) according to one of the preceding claims, wherein, viewed in plan view, said tray is provided with a cut-out (12) at a corner.

9. Method for propagating a plant (13) by cuttings, comprising the provision of cuttings, each provided with at least one part (14) of a plant that in the planted position extends horizontally therefrom, the provision of a container filled with cultivation substrate (15), wherein said container (2) is a container according to one of the preceding claims, and placing said cuttings in said container, **characterised in that** the placement of said cuttings comprises planting said cuttings with said plant parts in at least two rows, wherein said plant parts are arranged facing said support (9).

10. Method according to Claim 9, wherein the plant parts of one of said rows of plants are arranged above the support.

11. Combination comprising a number of containers according to one of Claims 1 - 8 placed against one another, wherein the containers are placed with said walls which are provided with said support against one another and wherein the support of one container extends over the wall of the adjoining further container placed against it.

## Patentansprüche

1. Behälter (2) zur Aufnahme einer Anzahl von Pflanzen (13), mit einer im Wesentlichen rechteckförmigen Wanne mit aufrechten Wänden (4,5) und einer Basis (3), **dadurch gekennzeichnet, dass** eine Stütze sich von einer Wand (5) der Wanne weg erstreckt, wobei die Stütze (9) vom Behälter nach außen hervorstehend an der Wand unter einem Winkel ( ) von 5 bis 90° zur Basisfläche angeordnet ist.

2. Behälter (2) nach Anspruch 1, wobei die Stütze (9) an der Wand (5) derart befestigt ist, dass sie mit der Letzteren nachgibt.

3. Behälter (2) nach einem der vorstehenden Ansprüche, wobei die Wanne langgestreckt ist und die Stütze an einer Längsseite davon angeordnet ist.

4. Behälter (2) nach einem der vorstehenden Ansprüche, wobei die Stütze mit Öffnungen (10) versehen ist.

5. Behälter (2) nach einem der vorstehenden Ansprüche, wobei Verstärkungsrippen (6) in der Wanne hergestellt sind, die sich von deren Basis (3) nach oben erstrecken.

6. Behälter (2) nach Anspruch 5, wobei die Rippen aus einer Hohlkonstruktion bestehen, deren Hohlraum sich zur Basis hin öffnet.

7. Behälter (2) nach einem der vorstehend en Ansprüche, wobei in der Wanne eine Facheinteilung vorgesehen ist.

8. Behälter (2) nach einem der vorstehenden Ansprüche, wobei in Draufsicht die Wanne mit einer Aussparung (12) an einer Ecke versehen ist.

9. Verfahren zum Vermehren einer Pflanze (13) du rch Stecklinge, mit:
- Bereitstellen von Stecklingen, wobei jeder mit zumindest einem Teil (14) der Pflanze versehen ist, welcher sich in der gepflanzten Stellung horizontal davon wegerstreckt,
- Bereitstellen eines Behälters, der mit einem Kultivierungssu bstrat (15) gefüllt ist, wobei der Behälter (2) ein Behälter gemäß einem der vorstehenden Ansprüche ist, und
- Setzen der Stecklinge im Behälter,
**dadurch gekennzeichnet, dass** das Setzen der Stecklinge das Pflanzen der Stecklinge mit den Pflanzenteilen in zumindest zwei Reihen umfasst,
wobei die Pflanzenteile so angeordnet sind, dass sie der Stütze (9) gegenüberliegen.

10. Verfahren nach Anspru c h 9, wobei die Pflanzenteile einer der Reihen der Pflanzen oberhalb der Stütze angeordnet sind.

11. Kombination mit einer Anzahl von Behältern gemäß einem der Ansprüche 1 bis 8, die nebeneinander aufgestellt sind, wobei die Behälter mit den mit einer Stütze versehenen Wänden aneinander aufgestellt werden, und wobei die Stütze eines Behälters über die Wand des weiteren angrenzenden dagegen gestellten Behälters ragt.

## Revendications

1. Conteneur (2) pour contenir un certain nombre de plantes (13), comprenant une clayette sensiblement rectangulaire avec des parois verticales (4, 5) et une base (3), **caractérisé en ce qu'**un support s'étend depuis une paroi (5) dudit conteneur, lequel support (9) est disposé de façon à faire saillie vers l'extérieur par rapport audit conteneur avec ladite paroi selon un angle (α) de 5 - 90° par rapport à ladite surface de la base.

2. Conteneur (2) selon la revendication 1, dans lequel ledit support (9) est fixé sur ladite paroi (5) de façon à céder avec celle-ci.

3. Conteneur (2) selon l'une des revendications précédentes, dans lequel ladite clayette est oblongue et ledit support est disposé sur un de ses grands côtés.

4. Conteneur (2) selon l'une des revendications précédentes, dans lequel ledit support est muni d'ouvertures (10).

5. Conteneur (2) selon l'une des revendications précédentes, dans lequel des nervures de renforcement (6) sont réalisées dans ladite clayette s'étendant vers le haut à partir de sa base (3).

6. Conteneur (2) selon la revendication 5, dans lequel lesdites nervures sont de construction creuse, avec la cavité agencée ouverte vers la base.

7. Conteneur (2) selon l'une des revendications précédentes, dans lequel ladite clayette comporte un agencement en compartiments.

8. Conteneur (2) selon l'une des revendications précédentes, dans lequel, vu en plan, ladite clayette est muni d'une découpe (12) dans un coin.

9. Procédé pour la propagation d'une plante (13) par bouturer, comprenant la mise en place de boutures, chacune munie d'au moins une partie (14) d'une plante qui, dans la position plantée, s'étend horizontalement à partir de celle-ci, la mise en place d'un conteneur rempli d'un substrat de culture (15), dans lequel ledit conteneur (2) est un conteneur selon l'une des revendications précédentes, et la mise en place desdites boutures dans ledit conteneur, **caractérisé en ce que** la mise en place desdites boutures comprend la plantation desdites boutures avec lesdites parties de plante dans au moins deux rangées, dans lequel lesdites parties de plante sont disposées en regard dudit support (9).

10. Procédé selon la revendication 9, dans lequel les parties de plante de l'une desdites rangées de plantes sont disposées au-dessus du support.

11. Combinaison comprenant un certain nombre de conteneurs selon l'une des revendications 1 - 8, placés l'un contre l'autre, dans lequel les conteneurs sont placés avec lesdites parois qui sont munies dudit support l'une contre l'autre et dans lequel le support de l'un des conteneurs s'étend au-dessus de la paroi de l'autre conteneur contigu placé contre celui-ci.
